(19) **Europäisches Patentamt**

**European Patent Office**

**Office européen des brevets**

(11) **EP 0 544 108 B1**

(12) **EUROPÄISCHE PATENTSCHRIFT**

(45) Veröffentlichungstag und Bekanntmachung des Hinweises auf die Patenterteilung:
**03.07.1996 Patentblatt 1996/27**

(51) Int. Cl.$^6$: **B60G 17/08**, B60G 17/015

(21) Anmeldenummer: **92118270.5**

(22) Anmeldetag: **26.10.1992**

(54) **Semiaktives Fahrwerksregelungssystem für Kraftfahrzeuge**

Semi-active suspension control system for cars

Système de commande d'une suspension semi-actif pour véhicules automobiles

(84) Benannte Vertragsstaaten:
**DE ES FR GB IT**

(30) Priorität: **27.11.1991 DE 4138932**

(43) Veröffentlichungstag der Anmeldung:
**02.06.1993 Patentblatt 1993/22**

(73) Patentinhaber: **ITT Automotive Europe GmbH D-60488 Frankfurt (DE)**

(72) Erfinder: **Eckert, Alfred W-6500 Mainz-Laubenheim (DE)**

(56) Entgegenhaltungen:
| | |
|---|---|
| EP-B- 0 557 322 | WO-A-92/08623 |
| DE-A- 3 916 460 | DE-A- 3 939 668 |
| US-A- 4 976 454 | US-A- 5 000 478 |
| US-A- 5 016 908 | US-A- 5 024 460 |

## Beschreibung

Die Erfindung bezieht sich auf ein semiaktives Fahrwerksregelungssystem für Kraftfahrzeuge.

Aus der Offenlegungsschrift DE 39 16 460 A1 ist ein Fahrwerksregelungssystem für Kraftfahrzeuge bekannt, bei dem die Fahrwerkseigenschaften in Abhängigkeit von dem jeweiligen, sensorisch ermittelten Fahrzustand durch die Regelung verändert werden. Als Eingangsgrößen für die Regelung werden die Fahrzeuggeschwindigkeit, der Lenkwinkel, die Giergeschwindigkeit und die Fahrzeugquerbeschleunigung mit Sensoren gemessen und in dem Regler ausgewertet. Sensoren zur Messung der vertikalen Geschwindigkeiten des Fahrzeugaufbaus und Wegsensoren zur Messung der Einfederwege des Fahrwerks sind ebenfalls vorhanden. Zur Anpassung der Fahrwerksabstimmung an die unterschiedlichen Anforderungen hinsichtlich Fahrkomfort und Fahrsicherheit werden die Reglerparameter des Regelkreises in Abhängigkeit von der Dynamik des Fahrvorganges selbsttätig verändert. Dabei werden die Fahrwerkseigenschaften durch Regelung der Schwingungsdämpfer bzw. der Dämpfungskraft beeinflußt. Durch Auswertung der Sensorsignale wird festgestellt, ob es sich um unkritische Fahrzustände handelt, so daß eine komfortorientierte Dämpfereinstellung zulässig ist, oder ob die Fahrsicherheit gefährdet und daher eine sicherheitsorientierte Dämpfereinstellung erforderlich ist. Zur Festlegung der Reglerparameter werden die Reifenlängskräfte und Reifenseitenkräfte ermittelt. Bei diesem bekannten System ist zur Ermittlung der Reglerparameter ein hoher Rechenaufwand erforderlich.

Eine Vorrichtung zur aktiven Einstellung des Fahrzeugniveaus ist in der Offenlegungsschrift DE 39 39 668 A1 beschrieben. Die erforderlichen Eingangsgrößen für diese Art der Fahrwerksregelung oder Lagesteuerung werden mit Hilfen von Fahrzeughöhen-Sensoren und Vertikalbeschleunigungssensoren ermittelt.

Bei semiaktiven Fahrwerksregelungssystemen ist die absolute Aufbaugeschwindigkeit die wichtigste Regelgröße für die Komfortbewertung. Die Größe der Dämpfungskraft, die für eine hohe Fahrsicherheit und hohen Regelkomfort notwendig ist, wird von der Aufbaugeschwindigkeit bestimmt. Diese Regelgröße läßt sich jedoch nur indirekt ermitteln. Ein gängiger Weg ist die Messung der Aufbaubeschleunigung und die Errechnung der Aufbaugeschwindigkeit durch Integration dieser Meßwerte.

Für eine semiaktive Fahrwerksregelung ist außerdem noch die Kenntnis der Dämpfergeschwindigkeit erforderlich. Durch Messung des Dämpferweges, d.h. des relativen Weges zwischen dem Rad und dem Fahrzeugaufbau, und Differentiation dieses Wertes oder durch Integration der Radbeschleunigung, die sich mit Beschleunigungsaufnehmern ermitteln läßt, wird die Dämpfergeschwindigkeit ermittelt. Die Auswertung der verschiedenen Sensorsignale, die Integration und Differentiation, die Filterung dieser Signale und die Elimination von Störeinflüssen sind bekanntlich mit zahlreichen Schwierigkeiten und mit erheblichem Rechenaufwand verbunden.

In der europäischen Patentschrift EP-B-0 557 322, die auf die ältere, nicht vorveröffentlichte WO-A-92/08623 (Stand der Technik nach Art, 54 (3), (4) EPÜ für die Vertragsstaaten DE, FR, GB) zurückgeht, ist bereits ein semiaktives Fahrwerksregelungssystem für Kraftfahrzeuge beschrieben, das regelbare Schwingungsdämpfer, Aufbaubeschleunigungssensoren und einen Regler umfaßt, der elektronische Schaltkreise zur Aufbereitung und Auswertung der Sensorsignale und zur Erzeugung von Dämpferansteuerungssignalen enthält. Die Ausgangssignale der Aufbaubeschleunigungssensoren dieses Systems werden einem Filter zugeführt, dessen Übertragungsverhalten unter Konzentration auf einen Frequenzbereich, dessen untere Grenze etwa bei dem 0,1 bis 0,5fachen der Eigenfrequenz des Fahrzeugaufbaues und dessen obere Grenze etwa bei dem 1,2 bis 2fachen der Eigenfrequenz des Rades liegen, dem Übertragungsverhalten eines das ganze auftretende Frequenzspektrum abdeckenden, auf der Basis eines Fahrzeugmodells berechneten Filters, z.B. eines diskreten Kalman-Filters, linear angenähert ist.

Der Erfindung liegt nun die Aufgabe zugrunde, ein semiaktives Fahrwerksreglungssystem dieser Art weiterzuentwickeln, mit dem Ziel, eine hohe Regelgüte bei vergleichsweise geringem Herstellungs aufwand zu erreichen.

Es hat sich gezeigt, daß diese Aufgabe durch das im Anspruch 1 beschriebene Fahrwerksregelungssystem gelöst werden kann.

Hierbei werden die zur Regelung benötigten Informationen im wesentlichen mit Aufbaubeschleunigungssensoren gewonnen, in einem vergleichsweise einfachen Filter ausgewertet und mit Hilfe der Ausgangssignale von Richtungssensoren phasenkorrigiert. Auf diese Weise wird mit verhältnismäßig geringem Sensor- und Rechenaufwand ein Signal gewonnen, das sehr genau die erforderliche Dämpfungskraft wiedergibt und zur Ansteuerung der Dämpfer-Regelventile geeignet ist.

Nach einem Ausführungsbeispiel der Erfindung ist als Richtungssensor ein die Richtung der Dämpfungskraft oder ein die Richtung der Geschwindigkeit des Aufbaus relativ zu dem Rad ermittelnder Schalter vorgesehen. Es kann ein Differenzdruckschalter verwendet werden, der an das Druckmittelsystem des Schwingungsdämpfers angeschlossen ist und einen bei Richtungsänderung der relativen Dämpfergeschwindigkeit verschiebbaren Schaltkörper enthält, dessen Bewegung oder Schaltposition zur Ermittlung der Bewegungsrichtung ausgewertet wird. Nach einem Ausführungsbeispiel ist der Schaltkörper in dem Feld eines Dauermagneten angeordnet, und es wird die Bewegung oder Schaltposition des Schaltkörpers mit Hilfe eines Hall-Elementes sensiert, das auf die Änderung des Magnetfeldes bei Verschiebung des Schaltkörpers anspricht.

Ein weiteres Ausführungsbeispiel der Erfindung besteht darin, daß der Richtungssensor einen verschiebbar zwischen zwei Anschlägen, die mit dem Dämpfergehäuse verbunden sind, auf der Kolbenstange oder dem Kolben des Schwingungsdämpfers angeordneten Körper aufweist, wobei das Anschlagen des Körpers mit Hilfe von Drucksensoren, von mechanischen Kontakten oder dergl. ermittelt und zur Richtungsbestimmung der Dämpfergeschwindigkeit ausgewertet wird. Als verschiebbarer Körper eignet sich bei einer solchen Ausführungsart ein durch Reibkraft auf der Kolbenstange gehaltenes Element in Form einer Scheibe, einer Hülse, eines Ringes oder dergl.

Nach einer weiteren vorteilhaften Ausführungsart der Erfindung werden die Ausgangssignale des Reglers zu dem Filter rückgeführt, und es werden mit Hilfe dieser rückgeführten Signale die Grenzfrequenzen und das Übertragungsverhalten des Filters an die momentane Dämpfungskraft angepaßt.

Ferner ist es erfinungsgemäß vorgesehen, an den Ausgang des Filters ein als Speicher dienendes Schieberegister anzuschließen, wobei der Zugriffsort auf den Speicher bzw. auf diejenige Speicherstelle, von der die Signale weitergeleitet werden, in Abhängigkeit von dem Auftreten des Ausgangssignals des Richtungssensors variabel ist. Auf diese Weise läßt sich die Phasenkorrektur des Filterausgangssignals mit Hilfe des Richtungssensorsignals realisieren.

Vorteilhafterweise ist das Übertragungsverhalten des Filters auf einen Bereich zwischen etwa 0,2 und 20 Hz, insbesondere zwischen 0,5 und 16 Hz, konzentriert. Das Übertragungsverhalten des Filters kann durch Berechnen eines Kalman-Filters für ein 1/4 Fahrzeugmodell und Anpassung an ein vorgegebenes Straßen- bzw. Störprofil festgelegt werden.

Bei dem erfindungsgemäßen Fahrwerksregelungssystem sind zweckmäßigerweise an jeder Fahrzeugecke je ein Aufbaubeschleunigungssensor und je ein Richtungssensor vorgesehen. Es genügen allerdings auch drei Aufbaubeschleunigungssensoren, wobei die Beschleunigung an der vierten Fahrzeugecke aus den Messungen der drei Sensoren errechnet wird.

Weitere Merkmale, Vorteile und Anwendungsmöglichkeiten der Erfindung gehen aus der folgenden Beschreibung von Ausführungsbeispielen anhand der beigefügten Abbildung hervor.

Es zeigen

Fig. 1          in Blockdarstellung die wesentlichen Komponenten eines Fahrwerksregelungssystems nach der Erfindung,

Figg. 2 und 3          in schematischer Vereinfachung Richtungssensoren für das System nach Fig. 1,

Fig. 4          schematisch die Funktion eines Schieberegisters nach Fig. 1, das zur Phasenkorrektur dient,

Fig. 5          im Flußdiagramm ein Ausführungsbeispiel zur Durchführung der Phasenkorrektur,

Figg. 6 und 7          in vergrößertem Maßstab und schematisiert den Verlauf der tatsächlichen und der errechneten Dämpfergeschwindigkeit, und

Figg. 8 und 9          in Meßdiagrammen den Verlauf der Dämpfergeschwindigkeiten bei einer langen Bodenwelle (Fig. 8) und bei relativ hochfrequenten Schwingungen (Fig. 9).

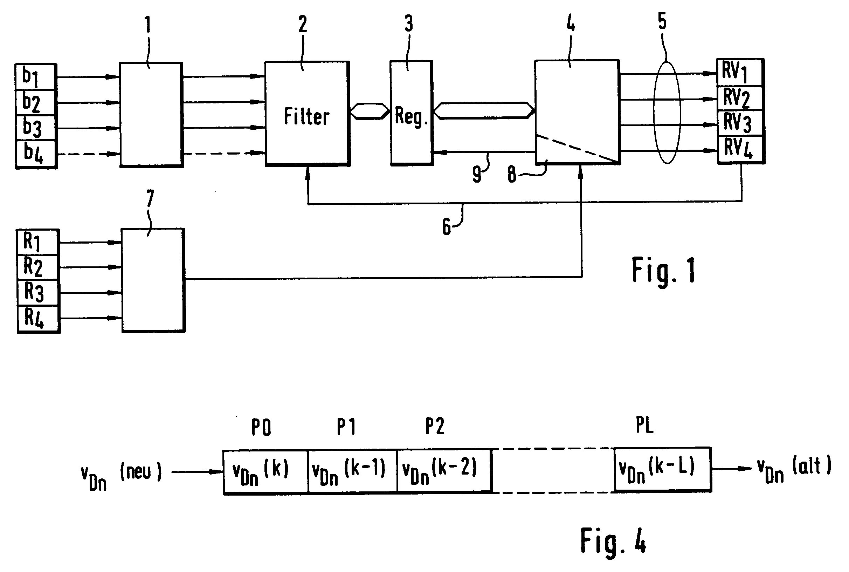

Fig. 1 veranschaulicht den prinzipiellen Aufbau des erfindungsgemäßen Fahrwerksregelungssystems. Die für die Regelung benötigten Informationen über das dynamische Fahrzeugverhalten werden im wesentlichen mit Hilfe von Aufbau-Beschleunigungssensoren $b_1$ bis $b_4$ gewonnen. Diese Beschleunigungssensoren $b_1$ bis $b_4$ befinden sich an den einzelnen "Fahrzeugecken", zweckmäßigerweise in Höhe der Räder oder der Schwingungsdämpfer. Durch die Strichelung der Signalleitung, die zu dem vierten Sensor $b_4$ gehört, wird zum Ausdruck gebracht, daß dieser Sensor entbehrlich ist, weil sich die Beschleunigung an der vierten Ecke aus den Meßwerten an den drei anderen Fahrzeugecken errechnen läßt.

Die Ausgangssignale der Sensoren $b_1$ bis $b_3$ (und ggf. $b_4$) werden in einem Schaltkreis 1 aufbereitet und sodann einem Filter 2 zugeführt, das aus den aufbereiteten Sensorsignalen die tatsächliche Dämpfergeschwindigkeit oder ein die Dämpfergeschwindigkeit annähernd wiedergebendes Signal ermittelt. In einem anschließenden Schieberegister 3 wird die Phasenkorrektur der Filter-Ausgangssignale in Abhängigkeit von den "Richtungs"-Signalen durchgeführt. In einem Auswerteschaltkreis 4 werden die phasenkorrigierten, mit Hilfe des Filters 2 gewonnenen Dämpfergeschwindigkeits-Signale $v_{Dn}$ (n = 1 bis 4) verarbeitet. In dem Auswerteschaltkreis 4 werden Stellsignale erzeugt, mit denen die einzelnen Dämpfungskraft-Regelventile $RV_1$ bis $RV_4$ gesteuert werden. Es handelt sich dabei vorzugsweise um Proportionalventile, die in den Druckmittelfluß der einzelnen Dämpfer eingefügt sind. Die Reglerausgangssignale oder Regelventil-Ansteuerungssignale werden den Regelventilen $RV_1$ bis $RV_4$ über eine Signalleitung 5 zugeführt. Die Reglerausgangssignale oder entsprechende, die Stellung der einzelnen Ventile $RV_1$ bis $RV_4$ wiedergebenden Signale werden über eine Signalleitung 6 zu dem Filter 2 rückgeführt und dienen zur Anpassung der Grenzfrequenzen und des Übertragungsverhaltens dieses Filters an die momentane Dämpfungskraft.

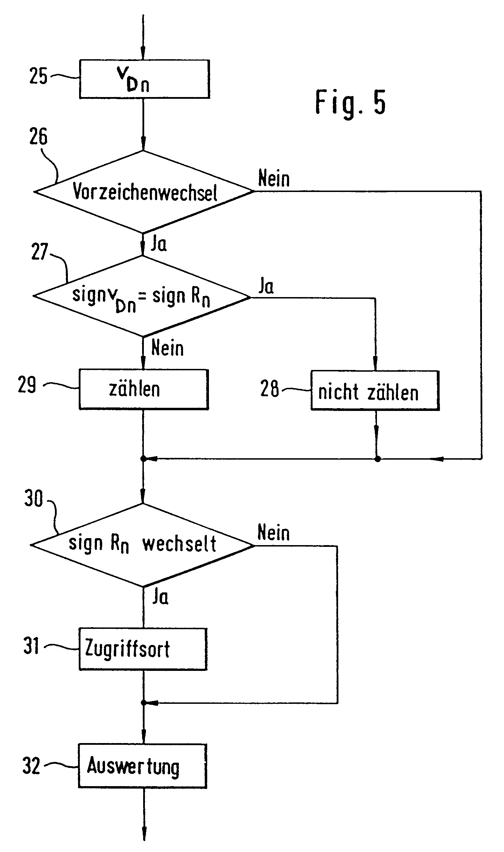

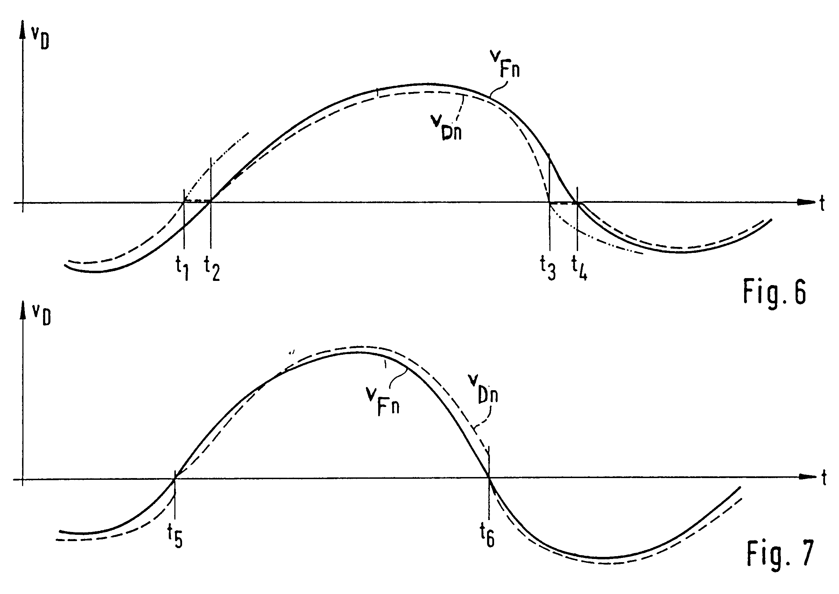

Die Richtungssignale werden erfindungsgemäß mit Hilfe von Richtungssensoren $R_1$ bis $R_4$ gewonnen und über eine Signal-Aufbereitungsschaltung 7 einem Phasenkorrektur-Schaltkreis 8 zugeführt, der in dem hier dargestellten Beispiel als ein Bestandteil des Auswerteschaltkreises 4 ausgebildet ist. Die Richtung bzw. der Richtungswechsel der Relativgeschwindigkeit zwischen Rad und Fahrzeugaufbau an der jeweiligen Fahrzeugecke wird über den Phasenkorrektur-Schaltkreis 8 und einer Signalleitung 9 dem Speicher oder Schieberegister 3 gemeldet. Das Richtungssignal oder Richtungswechselsignal bestimmt bei einem Ausführungsbeispiel der Erfindung den Zugriffsort auf den Speicher, d.h. die Speicherstelle, die als Ausgang dient. Dies wird später anhand der Fig. 4 näher erläutert. Auf diese Weise wird die gewünschte, nachstehend anhand der Fig. 6 bis 9 beschriebene Verzögerung und Phasenkorrektur erreicht.

Mit Hilfe des Reglerausgangssignals, das bei Ansteuerung der Proportionalventile $RV_1$ bis $RV_4$ die Amplituden der Ansteuerströme bestimmt, und das über die Leitung 6 zum Filter 2 rückgeführt wird, kann die Kennlinie des Filters an die jeweilige Situation bzw. an die Ventilansteuerung angepaßt werden. Dadurch wird z.B. eine lineare Abhängigkeit der Dämpfungskraft von dem Ventilansteuerstrom eingestellt.

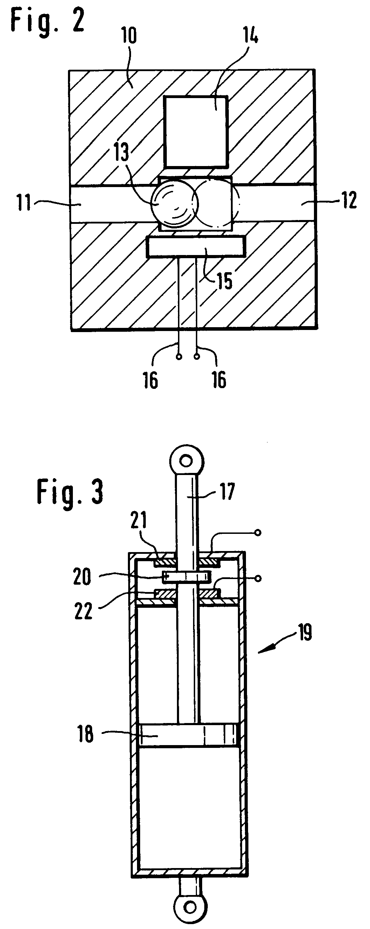

Die erfindungswesentlichen Richtungssensoren $R_1$ bis $R_4$ lassen sich auf Basis unterschiedlicher physikalischer Prinzipien realisieren. Zur Veranschaulichung von zwei unterschiedlichen Sensoren dienen die Fig. 2 und 3. Bei der Ausführungsart nach Fig. 2 wird die Druckänderung in einer oder mehreren Kammern eines herkömmlichen Schwingungsdämpfers ausgenutzt. Hierzu wird als Richtungssensor ein Druckdifferenzschalter 10 an das Druckmittelsystem eines nicht gezeigten Dämpfers über Druckmittelleitungen 11,12 derart angeschlossen, daß bei einem Richtungswechsel der Dämpferbewegung durch die Druckänderung eine Kugel 13 verschoben wird. Diese Kugel befindet sich in dem Magnetfeld eines Permanentmagneten 14, das bei der Verschiebung der Kugel 13 eine Änderung erfährt, die mit Hilfe eines oder mehrerer Hall-Sensoren 15 in bekannter Weise festgestellt werden kann. Über Anschlußdrähte 16 wird ein entsprechendes elektrisches Signal nach Aufbereitung in einer Schaltung 7 (siehe Fig. 1) dem Phasenkorrektur-Schaltkreis 8 zugeführt.

Einen physikalisch anderer Weg zum Erkennen einer Richtungsänderung der Dämpfer-Relativgeschwindigkeit veranschaulicht Fig. 3. In diesem Beispiel ist auf der Kolbenstange 17 des Dämpfungskolbens 18 eines Schwingungsdämpfers 19 ein sogenannter Reibring 20 aufgesetzt, der bei einer Bewegung des Kolbens 18 in dem Schwingungsdämpfer 19 zwischen zwei Anschlägen 21,22 verschoben wird. Das Anschlagen oder Berühren der beiden Anschläge 21,22 läßt sich durch Herstellen eines Kontaktes oder einer Strombrücke, durch Messung des Anschlagdruckes und auf andere Weise sensieren. Wird ein geringer Abstand zwischen den Kontakten, also ein kurzer Verschiebeweg gewählt, entsteht ein empfindlicher, auf geringe Auslenkungen ansprechender Richtungssensor. Ein derartiger mechanisch-elektrischer Sensor läßt sich mit sehr geringem Aufwand herstellen.

Wesentliche Merkmale der Erfindung sind also die Auslegung des Filters und die Phasenkorrektur des Filter-Ausgangssignals mit Hilfe des Richtungs-Signals. Mit Hilfe des Filters 2 werden aus den aufbereiteten Aufbau-Beschleunigungssignalen die Dämpfergeschwindigkeiten $v_{Dn}$ errechnet. Zur Errechnung der Zustandsgrößen aus den aufbereiteten Beschleunigungssignalen ist bekanntlich ein Kalman-Filter oder ein anderes das ganze auftretende Frequenzspektrum abdeckendes Filter sehr gut geeignet. Solche Filter haben jedoch den Nachteil, daß sie einen hohen Rechenaufwand und hohe Rechenzeiten benötigen. Die Filtercharakteristik wird daher der eines diskreten Kalman-Filters mit einer rechnerisch sehr viel einfacheren Übertragungsstruktur angenähert, ohne dabei die wesentlichen Eigenschaften des diskreten Kalman- Filters zu verlieren. Zu diesem Zweck wird ein Kalman-Filter für ein linearisiertes 1/4 Fahrzeugmodell berechnet und an ein vorgegebenes Straßen- bzw. Störprofil angepaßt. Durch Rückführung der Reglerausgangssignale von den Regelventilen $RV_1$ bis $RV_4$ werden zudem, wie bereits ausgeführt, die Grenzfrequenzen des Filters und das Übertragunsverhalten der momentanen Dämpfkraft angepaßt. Für die kontinuierliche Übertragungsfunktion H(s) eines solchen Filters gilt die Beziehung

$$H(s) = \frac{-T_D s}{(1 + T_1 s)(1 + T_2 s)}$$

mit

$$T_D \approx M_b / c_F$$

$$T_1 \approx 2 \ldots\ldots 5 \times 1/2 \, \pi \, f_A$$

$$T_2 \approx 0,5 \ldots\ldots 0,8 \times 1/2 \, \pi \, f_R$$

wobei bedeuten:

$M_b$ = Masse des Fahrzeugaufbaus
$c_F$ = Federkonstante der Radaufhängung
$s$ = Laplace-Operator
$f_A$ = Aufbaueigenfrequenz
$f_R$ = Radeigenfrequenz

Die entsprechende diskrete Übertragungsfunktion H $(z^{-1})$ lautet:

$$H(z^{-1}) = \frac{-T_D}{T_1 - T_2}(\lambda_1 - \lambda_2) \frac{1 - z^{-1}}{1 - (\lambda_1 + \lambda_2)z^{-1} + \lambda_1\lambda_2 z^{-2}}$$

mit

$$\lambda_1 = e^{-T_o/T_1}$$

$$\lambda_2 = e^{-T_o/T_2}$$

$$T_o = \text{Abtastzeit}$$

$$T_D \approx M_b/c_F$$

$$z = \text{Operator der diskreten Übertragungsunktion.}$$

Für den Berechnungsalgorithmus gilt dann:

$$V_D(k) = (\lambda_1 + \lambda_2)V_D(k-1) - \lambda_1\lambda_2 V_D(k-2) - M(a_B(k) - a_B(k-1)$$

mit

$$M = \frac{TD}{T_1 - T_2}(\lambda_1 - \lambda_2)$$

$V_D$ = berechnete Dämpfergeschwindigkeit
$a_B$ = Aufbaubeschleunigung

Das Filter wird also durch eine lineare Annäherung an ein das Ganze auftretende Frequenzspektrum abdeckendes Filter festgelegt, wobei eine Konzentration auf den Frequenzbereich zwischen der Aufbaueigenfrequenz und der Radeigenfrequenz erfolgt. Im Vergleich zu einem herkömmlichen Kalman-Filter wird eine rechnerisch sehr viel einfachere Übertragungsstruktur gewählt und dadurch der erforderliche Rechenaufwand erheblich verringert. Das Ausgangssignal des Filters 2 wird dann mit Hilfe des Schieberegisters 3 phasenkorrigiert. Die Ausgangswerte des Filters werden hierzu in das Schieberegister bzw. in einen sogenannten FIFO-Speicher (First In-First Out) mit variablem Zugriffsort zugeführt. Der Phasenkorrektur-Schaltkreis 8 bestimmt den jeweiligen Zugriffsort bzw. die Speicherstelle, welche in Abhängigkeit von dem Auftreten des Richtungssignals jeweils aus Ausgang dient. Ein solcher Speicher 3 ist in Fig. 4 symbolisch dargestellt. $v_{Dn}$ ist das Ausgangssignal des Filters 2. Der Speicher hat eine vorgegebene Anzahl L an Speicherplätzen. Der Phasenkorrektur-Schaltkreis 8 bestimmt, welcher der Speicherplätze 0,1,2 ... L jeweils als Ausgang dient. Auf diese Weise wird die gewünschte Phasenkorrektur bzw. die Zeitverzögerung herbeigeführt.
Die Parameter des Filters 2 werden durch die Rückführung des Reglerausgangssignals über die Regelventile und die Signalleitung 6 ständig neu bestimmt und dadurch dem momentanen Reglerausgangssignal angepaßt. Durch diese Rückführung läßt sich eine genaue Abstimmung und Anpassung des Filters bzw. der Filterkennlinie und damit des Regelventil-Ansteuersignals oder -Ansteuerstroms an das jeweilige Regelventil und dessen Kennlinie herbeiführen. Auf diese Weise wird der gewünschte Dämpfungsverlauf in Abhängigkeit von den im Filter verarbeiteten Eingangssignalen eingestellt.
Das Flußdiagramm nach Fig. 5 in Verbindung mit dem Diagramm nach Fig. 6 und 7 veranschaulicht die Auswirkung der Richtungssignale auf die Filter-Ausgangssignale.
Zuerst wird in dem Filter 2 die Dämpfergeschwindigkeit $v_{Dn}$ (n = 1,2,3,4) an den einzelnen Fahrzeugecken auf Basis der Aufbau-Beschleunigungssignale berechnet; dies symbolisiert der Operator 25 in Fig. 5. Wird ein Vorzeichenwechsel von $v_{Dn}$ von der Verzweigung 26 erkannt, so wird, wenn das Filterausgangssignal $v_{Dn}$ und das Richtungssignal $R_n$ gleiches Vorzeichen aufweisen, wenn also die Beziehung

$$\text{sign } V_{Dn} = \text{sign } R_n$$

gilt, über eine Verzweigungsstelle 27 ein Zähler angehalten (28). Der Zähler wird in Gang gesetzt (29), wenn die Vorzeichen zu diesem Zeitpunkt ungleich sind. Sobald nun nach dem Vorzeichenwechsel des Filterausgangssignals $v_{Dn}$ das Richtungs(wechsel)signal $R_n$ auftritt oder das Vorzeichen des Richtungssignals wechselt - symmbolisiert durch den Schritt 30 - wird das Filterausgangssignal phasenkorrigiert zum Auswertschaltkreis 4 weitergeleitet. Hierzu wird je nach Zählerstand der Zugriffsort P0,P1,P2 ... PL auf den Speicher 3, wie aus Fig. 1 in Verbindung mit Fig. 4 ersichtlich ist, durch den Operator 31 festgelegt.

Die Fig. 6 und 7 zeigen das Filterausgangssignal $v_{Dn}$ im Vergleich zu der tatsächlichen Dämpfergeschwindigkeit $v_{Fn}$ des zugehörigen Dämpfers.

Zum Zeitpunkt $t_1$ wechselt das Vorzeichen des Filterausgangssignals $v_{Dn}$, nicht jedoch das Vorzeichen der tatsächlichen Dämpfergeschwindigkeit $v_{Fn}$. Zum Zeitpunkt $t_1$ setzt der Zählvorgang mit Hilfe des Schieberegisters 3 ein. Zum Zeitpunkt $t_2$ wird Richtungswechsel der Dämpfergeschwindigkeit $v_{Fn}$ festgestellt. Das Filterausgangssignal wird aus dem als Speicher dienenden Schieberegister 3 zum Auswerteschaltkreis 4 weitergeleitet. Entsprechendes geschieht zum Zeitpunkt $t_3$ bzw. $t_4$.

Fig. 7 zeigt gewissermaßen den umgekehrten Fall, in dem zum Zeitpunkt $t_5$ zwar das Vorzeichen der tatsächlichen Dämpfergeschwindigkeit $v_{Fn}$ wechselt, nicht jedoch des Filterausgangssignals $v_{Dn}$. Die Phasenkorrektur zum Zeitpunkt $t_5$ besteht darin, daß das Signal mit der tatsächlichen Dämpfergeschwindigkeit in Übereinstimmung gebracht wird. Gleiches geschieht zum Zeitpunkt $t_6$.

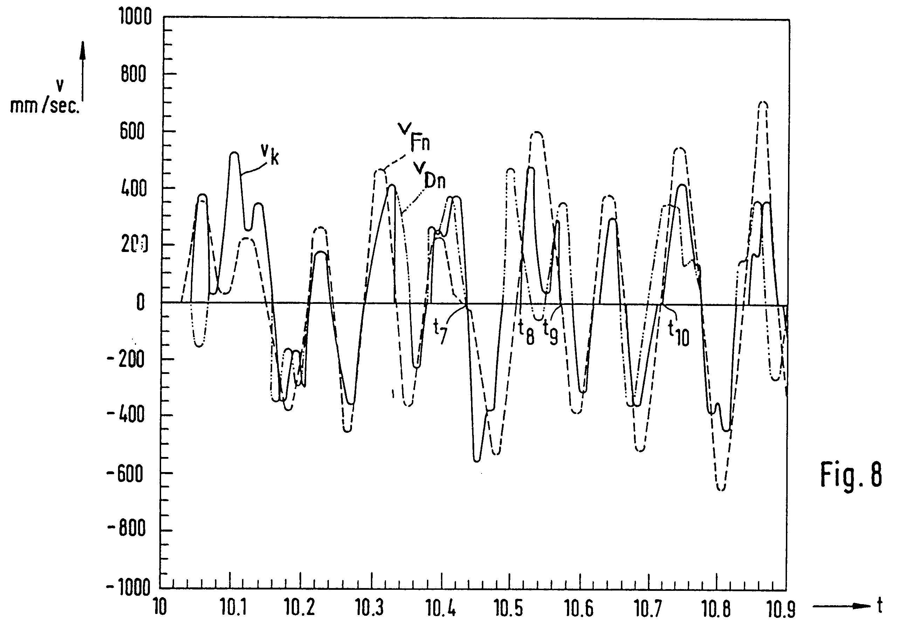

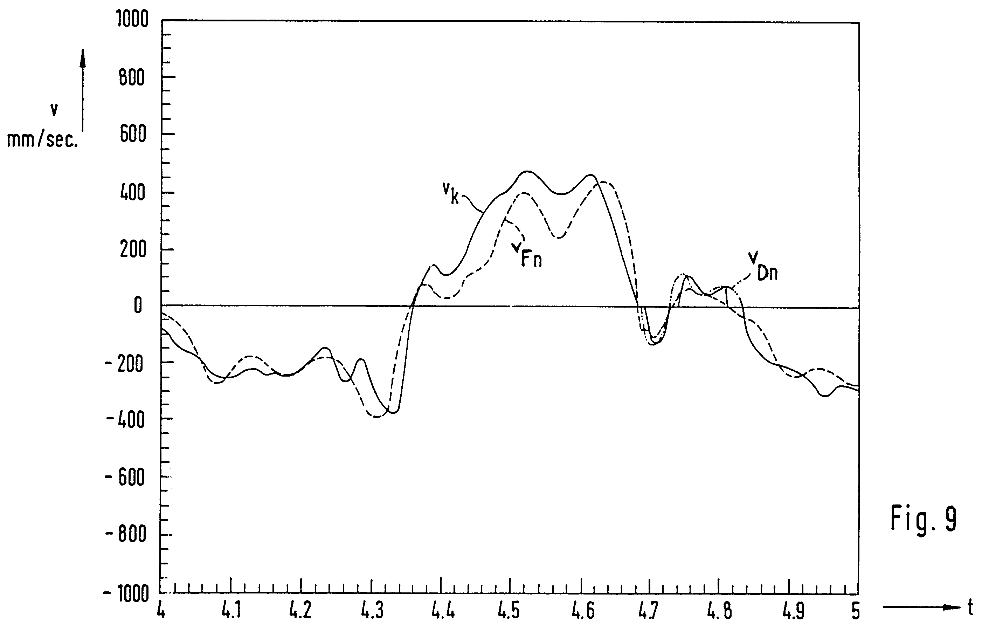

Die Fig. 8 und 9 geben im Gegensatz zu den idealisierten Kennlinien nach den Fig. 6 und 7 den tatsächlichen Signalverlauf wieder. Die gestrichelte Kennlinie zeigt den Verlauf der tatsächlichen Dämpfergeschwindigkeit $v_{Fn}$, die punktierte Kennlinie das Filterausgangssignal $v_{Dn}$ und die durchgezogene Linie das phasenkorrigierte Filterausgangssignal $v_k$. Fig. 8 bezieht sich auf relativ hochfrequente Schwingungs- und Dämpfungsbewegungen, die durch eine schlechte Straße mit relativ kurzen Wellen verursacht wurde. Fig. 9 zeigt die entsprechenden Meßwerte, die auf einer langwelligen Fahrbahn mit kleinen Störgrößen auftreten.

In Fig. 8 ist an manchen Stellen, (z.B. $t_7, t_8, t_9, t_{10}$) die durch Phasenkorrektur des Filter-Ausgangswertes erzielte Verbesserung besonders deutlich zu erkennen. Das mit Hilfe des Filters errechnete Geschwindigkeitssignal, insbesondere dessen Nulldurchgänge, stimmen nach der Phasenkorrektur ($v_k$) wesentlich genauer mit dem tatsächlichen Dämpfergeschwindigkeitssignal ($v_{Fn}$) überein als vor der Phasenkorrektur ($v_{Fn}$). Aus Fig. 9 ist zu entnehmen, daß bei langen Bodenwellen und folglich geringeren Dämpfergeschwindigkeiten das Filterausgangssignal auch ohne Phasenkorrektur verhältnismäßig genau mit dem tatsächlichen Dämpfergeschwindigkeitsverlauf $v_{Fn}$ übereinstimmt.

Mit Hilfe des beschriebenen Filters und der Phasenkorrektur erhält man also auf vergleichsweise einfache Weise ein Signal, das für eine hochwertige Fahrwerksregelung ausreichend genau die Dämpfergeschwindigkeit wiedergibt. Störimpulse werden unterdrückt. Das Signal läßt sich vergleichsweise einfach durch Mikrocomputer verarbeiten.

Bei der Festlegung der Übertragungsfunktion des Filters wird auf einen Frequenzbereich besonderen Wert gelegt, der etwas unterhalb der Aufbaueigenfrequenz beginnt und sich etwa bis zum 1,2 oder 2-fachen der Radeigenfrequenz erstreckt. Es ist beispielsweise eine Kozentration auf einen Frequenzbereich von 0,5 bis 16 Hz sinnvoll.

Das verwendete Filter 3 überträgt - im Gegensatz zu einem vollständigen Kalman-Filter - keine langsamen Drifteinflüsse, weil eine untere Grenzfrequenz vorgegeben ist. Das Filter hat keine Offsetprobleme und unterdrückt höherfrequente Störungen. Die Anzahl der notwendigen Rechenoperationen zur Auswertung des Signals ist relativ gering, so daß ein üblicher Mikrocomputer mit Festkomma-Arithmetik die Algorithmen verarbeiten kann. Der "Schätzfehler", nämlich der Fehler durch die Vereinfachung der Übertragungsfunktion im Vergleich zu einem vollständigen Kalman-Filter, ist dabei sehr klein. Ferner reagiert das erfindungsgemäß verwendete Filter unempfindlich auf Parameterschwankungen des Fahrzeugs, wie Zuladung usw. Da für die semiaktive Fahrwerksregelung der Nulldurchgang bzw. das Vorzeichen der Dämpfergeschwindigkeit von erhöhter Bedeutung ist, wird das Regelsignal durch die Phasenkorrektur mit Hilfe des Richtungssignals entscheidend verbessert.

## Patentansprüche

1. Semiaktives Fahrwerksregelungssystem für Kraftfahrzeuge mit regelbaren Schwingungsdämpfern (19), mit Aufbaubeschleunigungssensoren ($b_1$ - $b_4$) und mit Richtungssensoren ($R_1$ - $R_4$), die zur Ermittlung der momentanen Richtung der Relativgeschwindigkeit ($v_{Fn}$) zwischen den einzelnen Rädern und dem Fahrzeugaufbau dienen, sowie mit einem elektronischen Regler, der Schaltkreise (1 - 4,7) zur Aufbereitung und Auswertung der Sensorsignale und zur Erzeugung von Dämpferansteuerungssignalen enthält, wobei die Ausgangssignale der Aufbaubeschleunigungssensoren ($b_1$ - $b_4$) einem Filter (2) zugeführt werden, dessen Übertragungsverhalten unter Konzentration auf einen Frequenzbereich, dessen untere Grenze etwas unterhalb der Eigenfrequenz des Fahrzeugaufbaues liegt und dessen obere Grenze sich etwa bis zum 1,2 bis 2fachen der Eigenfrequenz des Rades erstreckt, dem Übertragungsverhalten eines das ganze auftretende Frequenzspektrum abdeckenden, auf der Basis eines Fahrzeugmodells berechneten Filters, z.B. eines diskreten Kalman-Filters, linear angenähert ist, und wobei die Ausgangssignale ($V_{Dn}$) des Filters (2) zur Ermittlung und die Ausgangssignale der Richtungssensoren ($R_1$ - $R_4$) zur Phasenkorrektur der Dämpferansteuerungssignale ausgewertet werden.

2. Fahrwerksregelungssystem nach Anspruch 1, dadurch **gekennzeichnet,** daß als Richtungssensor ($R_1$ - $R_4$) ein die Richtung der Dämpfungskraft oder ein die Richtung der Relativgeschwindigkeit ($v_{Dn}$) des Aufbaus zu dem Rad ermittelnder Schalter vorgesehen ist.

3. Fahrwerksregelungssystem nach Anspruch 1 oder 2, dadurch **gekennzeichnet,** daß als Richtungssensor ($R_1$ bis $R_4$) ein Differenzdruckschalter (10) vorgesehen ist, der an das Druckmittelsystem des Schwingungsdämpfers angeschlossen ist und einen bei Richtungsänderung der relativen Dämpfergeschwindigkeit verschiebbaren Schaltkörper (13) enthält, dessen Bewegung oder Schaltposition zur Ermittlung der Bewegungsrichtung ausgewertet wird.

4. Fahrwerksregelungssystem nach Anspruch 3, dadurch **gekennzeichnet,** daß der Schaltkörper (13) in dem Feld eines Dauermagneten (14) angeordnet ist und daß die Bewegung oder Schaltposition des Schaltkörpers (13) mit Hilfe eines Hall-Elementes (15) sensiert wird, das die Änderung des Magnetfeldes bei Verschiebung des Schaltkörpers (13) ermittelt.

5. Fahrwerksregelungssystem nach Anspruch 1, dadurch **gekennzeichnet,** daß der Richtungssensor ($R_1$ bis $R_4$) einen verschiebbar zwischen zwei Anschlägen (21,22), die mit dem Dämpfergehäuse verbunden sind, auf der Kolbenstange (17) oder dem Kolben des Schwingungsdämpfers (19) angeordneten Körper (20) aufweist, wobei das Anschlagen des Körpers (20) mit Hilfe von Drucksensoren, von mechanischen Kontakten oder dergl. ermittelt und zur Richtungsbestimmung der relativen Dämpfergeschwindigkeit ($V_{on}$) ausgewertet wird.

6. Fahrwerksregelungssystem nach Anspruch 5, dadurch **gekennzeichnet,** daß als verschiebbarer Körper (20) eine durch Reibkraft auf der Kolbenstange (17) gehaltene Scheibe, eine Hülse, ein Ring oder dergl. vorgesehen ist.

7. Fahrwerksregelungssystem nach einem oder mehreren der Ansprüche 1 bis 6, dadurch **gekennzeichnet,** daß die Reglerausgangssignale direkt oder indirekt zu dem Filter (2) rückgeführt werden und daß mit Hilfe der rückgeführten Signale die Grenzfrequenzen und das Übertragungsverhalten des Filters (2) an die momentane Dämpfungskraft angepaßt werden.

8. Fahrwerksregelungssystem nach einem oder mehreren der Ansprüche 1 bis 7, dadurch **gekennzeichnet,** daß zur Phasenkorrektur der Filtersignale ($v_{Dn}$) an den Ausgang des Filters (2) ein als Speicher dienendes Schieberegister (3) angeschlossen ist und daß der Zugriffsort (PO,P1,P2,PL). auf den Speicher bzw. diejenige Speicherstelle, von der die Signale weitergeleitet werden, in Abhängigkeit von dem Auftreten des Richtungssensor-Ausgangssignals variabel ist.

9. Fahrwerksregelungssystem nach einem oder mehreren der Ansprüche 1 bis 8, dadurch **gekennzeichnet,** daß das Übertragungsverhalten des Filters (2) auf einen Bereich zwischen etwa 0,2 und 20 Hz, insbesondere zwischen 0,5 und 16 Hz, konzentriert ist.

10. Fahrwerksregelungssystem nach einem oder mehreren der Ansprüche 1 bis 9, dadurch **gekennzeichnet,** daß das Übertragungsverhalten des Filters (2) durch Berechnen eines Kalman-Filters für 1/4 Fahrzeugmodell und Anpassung an ein vorgegebenes Straßen- bzw. Störprofil festgelegt wird.

11. Fahrwerksregelungssystem nach einem oder mehreren der Ansprüche 1 bis 10, dadurch **gekennzeichnet,** daß an jeder Fahrzeugecke je ein Aufbaubeschleunigungssensor ($b_1$ bis $b_4$) und je ein Richtungssensor ($R_1$ bis $R_4$) vorgesehen sind.

12. Fahrwerksregelungssystem nach einem oder mehreren der Ansprüche 1 bis 10, dadurch **gekennzeichnet,** daß an jeder Fahrzeugecke ein Richtungssensor ($R_1$ bis $R_4$) und an drei der vier Fahrzeugecken je ein Aufbaubeschleunigungssensor ($b_1$ bis $b_3$) vorgesehen sind, wobei die Beschleunigung an der vierten Fahrzeugecke aus den Messungen der drei Aufbaubeschleunigungssensoren ($b_1$ bis $b_3$) errechnet wird.

## Claims

1. A semiactive chassis control system for automotive vehicles, including controllable vibration absorbers (19), vehicle body acceleration sensors ($b_1$ - $b_4$) and directional sensors ($R_1$ - $R_4$) which serve to determine the momentary direction of the relative speed ($v_{Fn}$) between the individual wheels and the vehicle body, and an electronic controller which includes circuits (1 - 4, 7) for the conditioning and evaluation of the sensor signals and for the generation of vibration absorber control signals, and the output signals of the vehicle body acceleration sensors ($b_1$ - $b_4$) are conducted to a filter (2), the transmission behaviour of which, being concentrated on a frequency range having a bottom limit that is somewhat below the natural frequency of the vehicle body and a top limit that is about 1.2 to 2 times the natural frequency of the wheel, is linearly approximated to the transmission behaviour of a filter, for example, a discrete Kalman filter, which covers the entire frequency spectrum and is calculated on the basis of a vehicle model, and the output signals ($v_{Dn}$) of the filter (2) are evaluated for the determination and the output signals of the directional sensors ($R_1$ - $R_4$) are evaluated for the phase correction of the vibration absorber actuating signals.

2.  A chassis control system as claimed in claim 1, **characterized** in that as a directional sensor ($R_1$ to $R_4$) a switch is provided which detects the direction of the vibration absorbing force or the direction of the relative speed ($v_{Dn}$) of the vehicle body with respect to the wheel.

3.  A chassis control system as claimed in claim 1 or in claim 2, **characterized** in that as a directional sensor ($R_1$ to $R_4$) a differential pressure switch (10) is provided which is connected to the pressure fluid system of the vibration absorber and includes a switching member (13) that is slidable during a change in direction of the relative vibration absorber speed and whose movement or switching position is evaluated for sensing the direction of motion.

4.  A chassis control system as claimed in claim 3, **characterized** in that the switching member (13) is positioned in the field of a permanent magnet (14), and in that the movement or the switching position of the switching member (13) is sensed by way of a Hall element (15) which monitors the change in the magnetic field on displacement of the switching member (13).

5.  A chassis control system as claimed in claim 1, **characterized** in that the directional sensor ($R_1$ - $R_4$) has a member (20) which is positioned on the piston rod (17) or on the piston of the vibration absorber (19) so as to be slidable between two stops (21, 22) coupled to the vibration absorber housing, and the abutment of the member (20) on the stops is sensed by way of pressure sensors, mechanical contacts or the like and is evaluated for the determination of the direction of the relative vibration absorber speed ($v_{on}$).

6.  A chassis control system as claimed in claim 5, **characterized** in that as a slidable member (20) a disk, a sleeve, a ring or the like is provided which is retained on the piston rod (17) by frictional force.

7.  A chassis control system as claimed in anyone or several of claims 1 to 6,
    **characterized** in that the output signals of the controller are directly or indirectly fed back to the filter (2), and in that the limit frequencies and the transmission behaviour of the filter (2) are adapted to the momentary vibration absorbing force by way of the signals fed back.

8.  A chassis control system as claimed in anyone or several of claims 1 to 7,
    **characterized** in that for the phase correction of the filter signals ($v_{Dn}$), a shifting register (3) serving as a memory is connected to the exit of the filter (2), and in that the location (P0, P1, P2, PL) of access to the memory or the memory location from which the signals are transmitted forth, is variable depending on the occurring of the output signal of the directional sensor.

9.  A chassis control system as claimed in anyone or several of claims 1 to 8,
    **characterized** in that the transmission behaviour of the filter (2) is concentrated on a range between approximately 0.2 and 20 Hz, in particular between 0.5 and 16 Hz.

10. A chassis control system as claimed in anyone or several of claims 1 to 9,
    **characterized** in that the transmission behaviour of the filter (2) is fixed by computing a Kalman filter for a 1/4-size vehicle model and adapting it to an assumed road or disturbance profile.

11. A chassis control system as claimed in anyone or several of claims 1 to 10,
    **characterized** in that one vehicle body acceleration sensor ($b_1$ - $b_4$) and one directional sensor ($R_1$ - $R_4$) is provided at each vehicle corner.

12. A chassis control system as claimed in anyone or several of claims 1 to 10,
    **characterized** in that at each vehicle corner one directional sensor ($R_1$ - $R_4$) and at each of three of the four vehicle corners one vehicle body acceleration sensor ($b_1$ - $b_3$) is provided, and the acceleration at the fourth vehicle corner is calculated from the measurements of the three vehicle body acceleration sensors ($b_1$ - $b_3$).

**Revendications**

1.  Système de régulation de châssis de type semi-actif, pour véhicule automobile, comprenant des amortisseurs réglables (19), des capteurs d'accélération de carrosserie ($b_1$ - $b_4$) et des capteurs de sens ($R_1$ - $R_4$) qui servent à déterminer le sens momentané de la vitesse relative ($v_{Fn}$) entre les différentes roues et la carrosserie du véhicule, ainsi qu'un régulateur électronique qui contient des circuits (1 - 4, 7) servant à la mise en forme et à l'exploitation des signaux de capteur et à la production de signaux de commande d'amortisseur, tandis que les signaux de sortie des capteurs d'accélération de carrosserie ($b_1$ - $b_4$) sont envoyés à un filtre (2) dont le comportement de transmission fait l'objet d'une approximation linéaire le ramenant au comportement de transmission d'un filtre couvrant la totalité du spectre de fréquences qui se présente et calculé sur la base d'un modèle de véhicule, par exemple d'un filtre de Kalman à valeurs discontinues, moyennant une concentration sur un domaine de fréquences dont la limite inférieure est située légèrement audessous de la fréquence propre de la carrosserie du véhicule et dont la limite supérieure s'étend à peu près jusqu'à 1,2 à 2 fois la fréquence propre de la roue, les signaux de sortie ($v_{Dn}$) du filtre (2) étant exploités pour établir les signaux de commande d'amortisseur et les signaux de sortie des capteurs de sens ($R_1$ - $R_4$) pour réaliser une correction de phase de ces signaux de commande d'amortisseur.

2. Système de régulation de châssis selon la revendication 1, caractérisé en ce qu'en tant que capteur de sens ($R_1$ - $R_4$), il est prévu un interrupteur établissant le sens de la force d'amortissement ou un interrupteur établissant le sens de la vitesse relative ($v_{Dn}$) de la carrosserie vis-à-vis de la roue.

3. Système de régulation de châssis selon la revendication 1 ou 2, caractérisé en ce qu'en tant que capteur de sens, ($R_1$ à $R_4$), il est prévu un interrupteur à pression différentielle (10) qui est raccordé au système d'agent de pression de l'amortisseur et contient un corps de commutation (13) qui est agencé de façon à pouvoir être déplacé lors d'un changement de sens de la vitesse relative d'amortisseur et dont le mouvement ou la position de commutation est exploité pour déterminer le sens du mouvement.

4. Système de régulation de châssis selon la revendication 3, caractérisé en ce que le corps de commutation (13) est disposé dans le champ d'un aimant permanent (14) et en ce que le mouvement ou position de commutation du corps de commutation (13) est détecté au moyen d'un élément de Hall (15) qui relève la variation du champ magnétique lors d'un déplacement du corps de commutation (13).

5. Système de régulation de châssis selon la revendication 1, caractérisé en ce que le capteur de sens ($R_1$ à $R_4$) comprend un corps (20) disposé sur la tige de piston (17) ou le piston de l'amortisseur (19) et agencé de façon à pouvoir être déplacé entre deux butées (21, 22) qui sont solidaires du boîtier d'amortisseur, la venue en butée du corps (20) étant relevée au moyen de capteurs de pression, de contacts mécaniques ou analogues et étant exploitée pour établir le sens de la vitesse relative d'amortisseur ($V_{Dn}$).

6. Système de régulation de châssis selon la revendication 5, caractérisé en ce qu'en tant que corps (20) agencé de façon à pouvoir être déplacé, il est prévu un disque maintenu par une force de frottement sur la tige de piston (17), un manchon, un anneau ou analogue.

7. Système de régulation de châssis selon une ou plusieurs des revendications 1 à 6, caractérisé en ce que les signaux de sortie de régulateur sont renvoyés directement ou indirectement au filtre (2) et en ce qu'à l'aide des signaux renvoyés, les fréquences limites et le comportement de transmission du filtre (2) sont adaptés à la force d'amortissement du moment.

8. Système de régulation de châssis selon une ou plusieurs des revendications 1 à 7, caractérisé en ce que, pour la correction de phase des signaux de filtre ($v_{Dn}$), un registre à décalage (3), servant de mémoire, est raccordé à la sortie du filtre (2) et en ce que l'emplacement (P0, P1, P2, PL) d'accès à la mémoire ou à l'emplacement de mémoire à partir duquel les signaux sont transférés est variable en fonction de l'apparition du signal de sortie du capteur de sens.

9. Système de régulation de châssis selon une ou plusieurs des revendications 1 à 8, caractérisé en ce que le comportement de transmission du filtre (2) est concentré sur un domaine compris entre 0,2 et 20 Hz environ, notamment entre 0,5 et 16 Hz.

10. Système de régulation de châssis selon une ou plusieurs des revendications 1 à 9, caractérisé en ce que le comportement de transmission du filtre (2) est déterminé à l'aide du calcul d'un filtre de Kalman pour un modèle de 1/4 de véhicule et adaptation à un profil préfixé de routes, plus précisément de perturbations.

11. Système de régulation de châssis selon une ou plusieurs des revendications 1 à 10, caractérisé en ce qu'à chacun des coins du véhicule, il est prévu un capteur d'accélération de carrosserie ($b_1$ à $b_4$) pour chacun et un capteur de sens ($R_1$ à $R_4$) pour chacun.

12. Système de régulation de châssis selon une ou plusieurs des revendications 1 à 10, caractérisé en ce qu'à chacun des coins du véhicule, il est prévu un capteur de sens ($R_1$ à $R_4$) et, à trois des quatre coins du véhicule, un capteur d'accélération de carrosserie ($b_1$ à $b_3$) pour chacun, l'accélération au quatrième coin du véhicule étant calculée à partir des mesures des trois capteurs d'accélération de carrosserie ($b_1$ à $b_3$).

Fig. 1

Fig. 4

**Fig. 2**

**Fig. 3**

Fig. 5

Fig. 6

Fig. 7

Fig. 8

Fig. 9

EP 0 544 108 B1